# EUROPEAN PATENT SPECIFICATION

(11) **EP 2 681 477 B1**
(45) Date of publication and mention of the grant of the patent: **12.06.2019**
(21) Application number: 12706250.3
(22) Date of filing: 27.02.2012
(51) Int. Cl.: F16K 37/00, F16K 31/04

(54) **MONITORING OPERATION OF A DC MOTOR VALVE ASSEMBLY**
ÜBERWACHEN DES BETRIEBS EINER GLEICHSTROMMOTOR BETRIEBENEN VENTILANORDNUNG
CONTRÔLE DU FONCTIONNEMENT D'UN ENSEMBLE DE SOUPAPE DE MOTEUR À COURANT CONTINU

(30) Priority: 28.02.2011 GB 201103375
(43) Date of publication of application: 08.01.2014
(73) Proprietor: Perkins Engines Company Limited, Cambridgeshire PE1 5NA (GB)
(72) Inventor: STUBBS, Adam, Peterborough Cambridgeshire PE6 7PY (GB)
(74) Representative: BRP Renaud & Partner mbB Rechtsanwälte Patentanwälte Steuerberater
(86) International application number: PCT/EP2012/053292
(87) International publication number: WO 2012/116961

(56) References cited:
- EP-A2- 0 718 485
- DE-A1- 19 806 996
- DE-A1- 19 830 147
- US-A1- 2008 110 435

## Description

### Technical Field

Controller and method for operation of a valve assembly.

### Background

Valves having DC motor actuators are known for a variety of applications, including in the automotive field. For example, in an engine, a DC motor valve may be used to control the recirculation of exhaust gases back to the engine cylinders in an exhaust gas recirculation (EGR) system.

A DC motor valve comprises a valve element which is movable between a first end in which the valve is fully open and a second end, opposite the first end, in which the valve is fully closed. The position of the valve element between the first end and the second end establishes the extent to which the valve is open. The valve may include a mechanical stop at the first end to prevent the valve element from moving beyond the first end and a mechanical stop at the second end to prevent the valve element from moving beyond the second end.

Applying a current of a first polarity to the DC motor may cause the valve element to move in a first direction, i.e. towards the first end, and applying a current of a second polarity, opposite to the first polarity, to the DC motor may cause the valve element to move in a second direction opposite to the first direction, i.e. towards the second end.

In certain conditions, valves and their associated control systems may behave unexpectedly. It is helpful to be able to confirm regularly during operation that a valve is behaving as expected. Moreover, in the event of unexpected behaviour it is helpful to obtain a rapid and accurate diagnosis of the issue. More accurate diagnosis results in less down time as well as and more rapid and less costly repair.

DE 198 06 996 discloses an electronic throttle for an engine wherein two sensorys are used to detect throttle opening.

EP 0 718 485 discloses resolution of redundant displacement sensor information to form a displacement value in an automotive electronic throttle control system.

### Summary of the disclosure

The disclosure provides:
a method for monitoring operation of a valve assembly, the valve assembly comprising:
   a valve element movable between an open stop and a closed stop wherein a position of the valve element between the open stop and the closed stop establishes the extent to which the valve is open;
   a DC motor for moving the valve element in response to an electric signal;
   a position sensor for detecting an actual position of the valve element; and
   a controller configured to receive data corresponding to a desired position of the valve element and to supply a calculated electric signal to the DC motor in order to effect movement of the valve element from the actual position of the valve element to the desired position of the valve element;
the method comprising the steps of:
   measuring the electric signal output from the controller for input to the DC motor when the valve element is stationary;
   comparing the measured electric signal output from the controller with a reference electric signal in order to identify a fault.

The disclosure also provides:
a controller for monitoring operation of a valve assembly, the valve assembly comprising:
   a valve element movable between an open stop and a closed stop wherein a position of the valve element between the open stop and the closed stop establishes the extent to which the valve is open;
   a DC motor for moving the valve element in response to an electric signal; and
   a position sensor for detecting an actual position of the valve element;
the controller comprising:
   an electric signal controller configured to receive data corresponding to a desired position of the valve element and to supply an electric signal for input to the DC motor in order to effect movement of the valve element from the actual position of the valve element to the desired position of the valve element;
   a position data receiving portion configured to receive valve element position data from the position sensor and determine that the valve element is stationary;
   an electric signal comparator configured to compare the electric signal output from the electric signal controller with a reference electric signal in order to identify a fault; and
   an indicator configured to indicate whether the electric signal output from the electric signal controller is above or below the reference electric signal.

An embodiment of the invention will now be described, by way of example only, with reference to the accompanying drawing in which:

### Brief description of the drawing

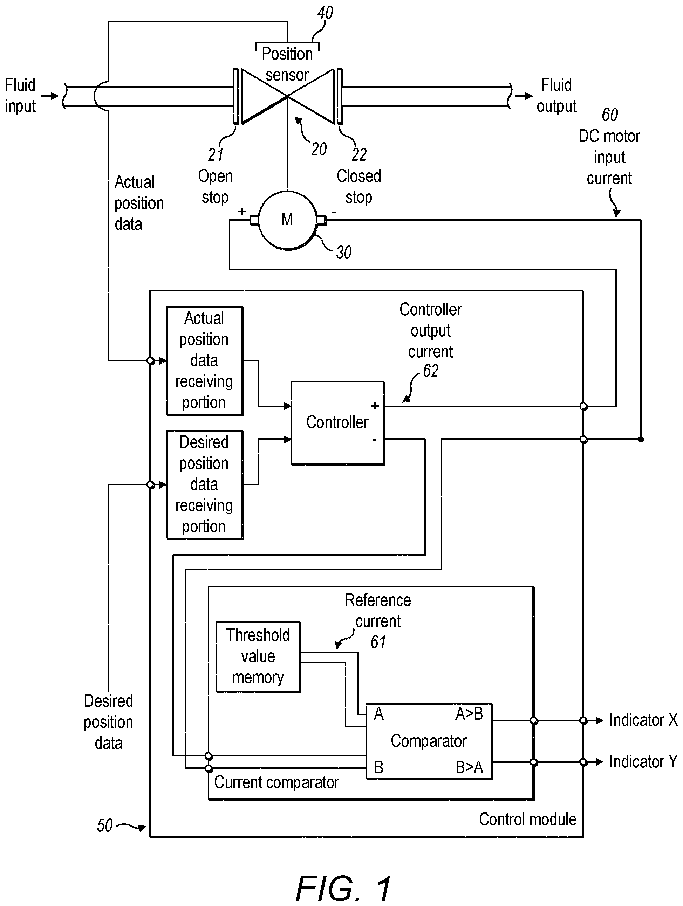

Figure 1 is a schematic diagram showing the features of the controller of the present disclosure in the context of a valve actuated by a DC motor.

### Detailed description

Referring to Figure 1 there is illustrated a valve assembly 1 comprising a valve element 20, a DC motor 30, a position sensor 40 and a controller 50. The valve element 20 may be movable between an open stop 21 and a closed stop 22. The valve is fully open when the valve element 20 is located at the open stop 21 and the valve is fully closed when the valve element 20 is located at the closed stop 22. The valve element 20 may be positioned between the open stop 21 and the closed stop 22 such that the valve is neither fully open nor fully closed. Where the valve element 20 is neither in the fully open nor in the fully closed position, the position of the valve element 20 relative to the open and closed stops 21, 22 dictates the extent to which the valve is open. The position of the valve element 20 may be sensed by one or more position sensors 40.

The DC motor 30 is arranged to receive a current in order to cause the DC motor 30 to rotate. Current of a first polarity causes the DC motor 30 to rotate in a first direction while current of a second polarity causes the DC motor 30 to rotate in a second direction, opposite to the first direction. Rotational movement of the DC motor 30 may be used to actuate movement of the valve element 20. Rotational movement of the DC motor 30 in a first direction may be used to actuate movement of the valve element 20 in a third direction, i.e. towards the open stop 21, while rotational movement of the DC motor 30 in a second direction may be used to actuate movement of the valve element 20 in a fourth direction, opposite to the third direction, i.e. towards the closed stop 22. By this method, the valve element 20 may be finely positioned to a variety of locations between the open and closed stops 21, 22.

The controller 50 may receive data relating to the desired position of the valve element 20 and may also receive data from the position sensor 40 relating to the actual position of the valve element 20. The controller may then calculate the distance to be moved by the valve element 20 in order to move from the actual position to the desired position. Having calculated this distance, the controller 50 may further calculate the current necessary to supply to the DC motor 30 in order to effect rotation thereof so as to cause movement of the valve element 20 from the actual position to the desired position. The current calculated by the controller 50 (the controller output current 62) may then be input to the DC motor 30 as the DC motor input current 60.

In some embodiments the valve element 20 may be biased towards one of the stops 21, 22 by a spring or other means. For example, it may be sprung biased towards the closed stop 22. In an embodiment having the valve element 20 biased towards the closed stop 22, the valve element 20 will move towards the closed stop 22 when no current is applied to the DC motor 30. Similarly, in an embodiment having the valve element 20 biased towards the open stop 21, the valve element 20 will move towards the open stop 21 when no current is applied to the DC motor 30.

In embodiments where the valve element 20 is biased towards one of the stops 21, 22, when calculating the current necessary to move the valve element 20 against the bias, the controller 50 may take account of the energy needed to overcome the bias.

The controller 50 may comprise a current calculator for calculating the required current and a variable current supply for supplying the current.

In some embodiments, an open circuit check on the circuit supplying current to the DC motor 30 is performed. This open circuit check is performed when the current is likely to be sufficiently trustworthy and steady to provide a reliable reading. As such, the open circuit check may be performed when the valve element 20 is stationary. This is because, to perform the open circuit check when the valve element 20 is moving would necessarily mean performing the open circuit check when the motor 30 is rotating. Moreover, when the motor 30 is rotating, a back EMF (electromotive force) may be generated which may cause current to flow in the circuit. This current may counter any current output by the controller 50 and so may result in a net current reading of approximately zero which might result in an open circuit check triggering a positive indication of an open circuit when, in fact, the circuit may not be open circuit.

The controller 50 may therefore be programmed to perform the open circuit check whenever the valve element is detected to be stationary. It may therefore be that an open circuit check is performed: (i) on start up of a machine or system incorporating a valve having the valve element 20; (ii) when the valve element 20 is against a stop 21, 22; and (iii) when the valve element 20 is stationary and, in particular, when a calculated position of the valve element 20 is different from the actual position of the valve element 20.

The open circuit check may be performed when the valve element 20 is in the valve closed position or the valve open position. This position may be achieved when no current is flowing through the DC motor 30. In order to check for an open circuit error, the controller 50 supplies a current (controller output current 62) to the DC motor 30 in order to bias the valve element 20 towards the stop associated with the instantaneous valve position notwithstanding that the stop prevents movement of the valve element 20 there beyond. The actual controller output current 62 is then measured. If the controller output current 62 is below a threshold of, for example, 5 % of the maximum current which the DC motor 30 can receive in normal operation, then there is assumed to be an open circuit and an appropriate indicator is actuated.

The open circuit check may also be performed in the event that the valve element 20 is located between the open and closed stops 21, 22 and is detected to be stationary notwithstanding the controller 50 outputting a current (controller output current 62) intended to cause the DC motor 30 to rotate and the valve element 20 to move. In this event, the controller output current 62 is non-zero. The controller output current 62 may be compared with a threshold current 61. In the event that the controller output current 62 is less than the threshold current 61 this may indicate an open circuit and a first indicator is used to communicate this to a user. A user is then put on notice to check electrical continuity of the relevant circuit and/or to check the controller 50. On the other hand, in the event that the controller output current 62 is greater than the threshold current 61 this indicates no open circuit and a second indicator is used to communicate this to a user. A user is then put on notice to investigate a possible mechanical fault with the valve assembly.

The open circuit check may be able to eliminate possible reasons for unexpected behaviour and so reduce the time taken by a user to identify the precise cause of unexpected behaviour.

In one specific embodiment, the valve may be used to control the flow of exhaust gas back to the cylinders in an exhaust gas recirculation (EGR) system of an engine. In such a case, the controller 50 may be a part of an engine control module (ECM). The valve may be biased in the closed position (such that in the default position no gas is recirculated). In a specific embodiment, the DC motor valve may be configured to operate with a maximum RMS (root mean square) current value of 1.1 A and with a maximum current value of 12 A. In order to remain within the maximum RMS current value, the maximum 12 A may be applied for a maximum of, for example, 120 ms.

Since the valve defaults to the closed position, the valve is closed on start up of the engine. At this point, an open circuit test may be carried out. This involves having the controller 50 output a current (the controller output current 62) in order to cause the valve element to attempt to move against the closed stop 22. The controller output current 62 may be up to or at the maximum current of 12 A. The controller output current 62 is compared with a threshold current 61. The threshold current value 61 may be 50 mA. This may represent approximately 5 % of the expected controller output current 62 value. In the event that the comparison reveals that the controller output current 62 is, in fact, higher than the threshold current 61 then the open circuit test has been passed (i.e. no open circuit is detected). This may or may not be indicated to a user. In the event that the comparison reveals that the controller output current 62 is, in fact, lower than the threshold current 61 then the open circuit test has failed (i.e. open circuit is detected). This may or may not be indicated to a user. Where the result is indicated to a user it may be in such a way as to identify nonspecific unexpected behaviour. Alternatively, it may be in such a way as to identify that the circuit is open circuit which will allow the user to identify more accurately which component or components would benefit from further inspection.

An open circuit test may also be performed when the valve element 20 is detected to be stationary at any point between the stops. Given that in the EGR application the valve element 20 may be biased closed, a current may be passed through the DC motor 30 in order for the valve element 20 to remain stationary in any position other than the default position.

When the valve element 20 is detected to be stationary, the open circuit test may be initiated. The controller output current 62 is compared with a threshold current value 61. In the event that the comparison reveals that the controller output current 62 is, in fact, higher than the threshold current 61 then the open circuit test reveals no open circuit. This may or may not be indicated to a user. In the event that the comparison reveals that the controller output current 62 is, in fact, lower than the threshold current then the open circuit test has failed (i.e. open circuit is detected). This may or may not be indicated to a user. Where the open circuit test has failed this may be indicated to a user in such a way as to identify that the error is an open circuit error. Where the open circuit test has passed but the controller output current 62 is sufficiently high (possibly by exceeding a second threshold current value) that movement of the valve element 20 would be expected then this may be indicated to a user in such a way as to identify that the error is likely to be a mechanical error such as a stuck valve. This will also allow the user to identify more accurately which component would benefit from further inspection.

While Figure 1 illustrates two "indicators", one for an open circuit error and one for no open circuit error, any form of indication (or no indication) may be used. In particular, indication may take the form of one or more electronic logs, one or more simple LED indicators, one or more displays or any other form of indication.

The skilled person will appreciate that, open circuit errors are not only detectable by measuring and/or comparing currents. They may be detected by measuring and/or comparing voltages, impedances etc. In a more general sense, therefore, the disclosure relates to a check which may be performed on an electric signal. The specific embodiment of the disclosure refers to control currents and reference currents but the skilled person will readily appreciate that the disclosure is not limited to currents in favour of other electrical variables. In any case, measuring, for example, a voltage by definition involves detection of the presence and/or absence and/or magnitude of a current. As such, measurement of a voltage necessarily means that a current may in turn be detected via a calculation (even if it is not directly measured). The skilled person would also appreciate that where a check requires a measured current to be below a threshold current, the check may require a measured voltage to be above a threshold voltage.

While an embodiment has been described with reference to an EGR valve in an engine, the skilled person will appreciate that the same method and apparatus may be used in respect of any other DC motor valve in an engine, such as, for example, an inlet throttle valve, a back pressure valve, or a valve which regulates flow of gas to a diesel particulate filter (DPF).

Furthermore, the disclosure is applicable to any valve whether for use in an engine, in any automotive application, or in any other field.

## Claims

1. A method for monitoring operation of a valve assembly (1), the valve assembly (1) comprising:
a valve element (20) movable between an open stop and a closed stop wherein a position of the valve element (20) between the open stop and the closed stop establishes the extent to which the valve is open;
a DC motor (30) for moving the valve element in response to an electric signal;
a position sensor (40) for detecting an actual position of the valve element (20); and
a controller (50) configured to receive data corresponding to a desired position of the valve element (20) and to supply a calculated electric signal to the DC motor (30) in order to effect movement of the valve element (20) from the actual position of the valve element (20) to the desired position of the valve element (20);
the method **characterised in that** it comprises the steps of:
measuring the electric signal output from the controller for input to the DC motor (30) when the valve element (20) is stationary;
comparing the measured electric signal output from the controller (50) with a reference electric signal in order to identify a fault.

2. The method of claim 1 further comprising using the position sensor (40) to detect that the movable valve element (20) is stationary.

3. The method of claim 2 further comprising:
detecting that the movable valve element (20) is stationary in either the fully open condition, wherein the valve element (20) is biased towards the open stop, or the fully closed condition, wherein the valve element (20) is biased towards the closed stop, using the position sensor (40);
applying an electric signal output from the controller to the DC motor (30) such that the valve element (20) is biased towards the stop associated with its position;
comparing the electric signal output from the controller (50) with the reference electric signal;
wherein an electric signal output from the controller (50) being below the reference electric signal indicates a first type of error corresponding to a controller error.

4. The method of claim 2 further comprising:
using the position sensor (40) to detect that the valve element (20) is stationary at a position between but not including the fully open condition and the fully closed condition;
applying an electric signal output from the controller (50) to the DC motor (30);
comparing the electric signal output from the controller (50) with the reference electric signal;
wherein an electric signal output from the controller (50) being below the reference electric signal indicates a first type of error corresponding to a controller error, and an electric signal output from the controller being above the reference electric signal indicates a second type of error corresponding to a mechanical fault with the valve or valve element (20).

5. The method of any preceding claim wherein the electric signal output from the controller (50) is a current flow and the reference electric signal is a reference current.

6. The method of claim 5 wherein the reference current is a threshold current.

7. The method of claim 6 wherein the threshold current is 5 % of a maximum RMS current receivable by the DC motor (30) in normal use.

8. The method of any preceding claim wherein the method is performed at every occasion when the valve element (20) is sensed by the position sensor to be stationary for a predefined period.

9. The method of any preceding claim wherein the method is used to monitor operation of a valve assembly (1) in an engine.

10. A controller (50) for monitoring operation of a valve assembly (1), the valve assembly (1) comprising:
a valve element (20) movable between an open stop and a closed stop wherein a position of the valve element (20) between the open stop and the closed stop establishes the extent to which the valve is open;
a DC motor (30) for moving the valve element in response to an electric signal; and
a position sensor (40) for detecting an actual position of the valve element (20);
the controller (50) comprising:
an electric signal controller configured to receive data corresponding to a desired position of the valve element (20) and to supply an electric signal for input to the DC motor (30) in order to effect movement of the valve element (10) from the actual position of the valve element (10) to the desired position of the valve element (10);
a position data receiving portion configured to receive valve element (10) position data from the position sensor (40) and determine that the valve element (10) is stationary;
an electric signal comparator configured to compare the electric signal output from the electric signal controller with a reference electric signal in order to identify a fault; and
an indicator configured to indicate whether the electric signal output from the electric signal controller is above or below the reference electric signal.

11. The controller (50) of claim 10 wherein:
the position data receiving portion is configured to determine when the movable valve element (10) is stationary in either the fully open condition, wherein the valve element (10) is biased towards the open stop, or the fully closed condition, wherein the valve element (10) is biased towards the closed stop, using the position sensor;
the electric signal controller is configured to apply an electric signal to the DC motor (30) such that the valve element (10) is biased towards the stop;
the electric signal comparator is configured to compare the electric signal output from the electric signal controller with a reference electric signal; and
the indicator is configured to output a first type of error corresponding to a controller error if the electric signal controller output signal is below the reference electric signal.

12. The controller (50) of claim 10 wherein:
the position data receiving portion is configured to determine when the movable valve element (10) is stationary at a position between but not including the fully open condition and the fully closed condition;
the electric signal controller is configured to apply an electric signal to the DC motor (30) while the valve element (10) is and remains stationary;
the electric signal comparator is configured to compare the electric signal output from the electric signal controller with a reference electric signal; and
the indicator is configured to output a first type of error corresponding to an electrical error if the electric signal controller output signal is below the reference electric signal and to output a second type of error corresponding to a mechanical fault with the valve element (10) if the electric signal controller output signal is above the reference electric signal.

13. The controller (50) of any of claims 10 to 12 wherein the electric signal output from the controller is a current flow and the reference electric signal is a reference current.

14. An engine control module comprising the controller of any of claims 10 to 13.

15. An engine having a valve assembly (1) comprising:
a valve element (10) movable between an open stop and a closed stop wherein a position of the valve element between the open stop and the closed stop establishes the extent to which the valve is open;
a DC motor (30) for moving the valve element (10) in response to an electric signal; and
a position sensor (40) for detecting an actual position of the valve element (10); and
a controller (50) as defined in any of claims 10 to 13.

## Patentansprüche

1. Verfahren zum Überwachen des Betriebs einer Ventilanordnung (1), wobei die Ventilanordnung (1) umfasst:
ein Ventilelement (20), das zwischen einem Geöffnet-Anschlag und einem Geschlossen-Anschlag beweglich ist, wobei eine Position des Ventilelements (20) zwischen dem Geöffnet-Anschlag und dem Geschlossen-Anschlag das Ausmaß bestimmt, in dem das Ventil geöffnet ist;
einen Gleichstrommotor (30) zum Bewegen des Ventilelements als Reaktion auf ein elektrisches Signal;
einen Positionssensor (40) zum Erfassen einer Ist-Position des Ventilelements (20); und eine Steuereinheit (50), die eingerichtet ist, um Daten entsprechend einer Soll-Position des Ventilelements (20) zu empfangen und dem Gleichstrommotor (30) ein berechnetes elektrisches Signal zuzuführen, um eine Bewegung des Ventilelements (20) aus der Ist-Position des Ventilelements (20) in die Soll-Position des Ventilelements (20) zu bewirken;
wobei das Verfahren **dadurch gekennzeichnet ist, dass** es die Schritte umfasst:
Messen des elektrischen Signals, das von der Steuereinheit zur Eingabe in den Gleichstrommotor (30) ausgegeben wird, wenn sich das Ventilelement (20) im Stillstand befindet;
Vergleichen des gemessenen elektrischen Signals, das von der Steuereinheit (50) ausgegeben wird, mit einem elektrischen Referenzsignal, um einen Fehler zu erkennen.

2. Verfahren nach Anspruch 1, ferner umfassend ein Verwenden des Positionssensors (40) zum Feststellen, dass sich das bewegliche Ventilelement (20) im Stillstand befindet.

3. Verfahren nach Anspruch 2, ferner umfassend:
unter Verwendung des Positionssensors (40) Feststellen, dass sich das bewegliche Ventilelement (20) entweder im vollständig geöffneten Zustand im Stillstand befindet, wobei das Ventilelement (20) in Richtung des Geöffnet-Anschlags vorgespannt ist, oder sich im vollständig geschlossenen Zustand im Stillstand befindet, wobei das Ventilelement (20) in Richtung des Geschlossen-Anschlags vorgespannt ist;
Anlegen eines elektrischen Signals, das von der Steuereinheit an den Gleichstrommotor (30) ausgegeben wird, sodass das Ventilelement (20) in Richtung des seiner Position zugeordneten Anschlags vorgespannt wird;
Vergleichen des elektrischen Signals, das von der Steuereinheit (50) ausgegeben wird, mit dem elektrischen Referenzsignal;
wobei ein elektrisches Signal, das von der Steuereinheit (50) ausgegeben wird und unterhalb des elektrischen Referenzsignals liegt, einen ersten Fehlertyp anzeigt, der einem Fehler der Steuereinheit entspricht.

4. Verfahren nach Anspruch 2, ferner umfassend:
Verwenden des Positionssensors (40) zum Feststellen, dass sich das Ventilelement (20) in einer Position zwischen dem vollständig geöffneten Zustand und dem vollständig geschlossenen Zustand, jedoch nicht in diesen Zuständen, im Stillstand befindet;
Anlegen eines elektrischen Signals, das von der Steuereinheit (50) ausgegeben wird, an den Gleichstrommotor (30); Vergleichen des elektrischen Signals, das von der Steuereinheit (50) ausgegeben wird, mit dem elektrischen Referenzsignal;
wobei ein elektrisches Signal, das von der Steuereinheit (50) ausgegeben wird und unterhalb des elektrischen Referenzsignals liegt, einen ersten Fehlertyp anzeigt, der einem Fehler der Steuereinheit entspricht, und ein elektrisches Signal, das von der Steuereinheit ausgegeben wird und oberhalb des elektrischen Referenzsignals liegt, einen zweiten Fehlertyp anzeigt, der einem mechanischen Fehler am Ventil oder Ventilelement (20) entspricht.

5. Verfahren nach einem der vorhergehenden Ansprüche, wobei das von der Steuereinheit (50) ausgegebene elektrische Signal ein Stromfluss ist und das elektrische Referenzsignal ein Referenzstrom ist.

6. Verfahren nach Anspruch 5, wobei der Referenzstrom ein Schwellenstrom ist.

7. Verfahren nach Anspruch 6, wobei der Schwellenstrom 5 % eines maximalen Effektivstroms beträgt, der vom Gleichstrommotor (30) bei normalem Gebrauch aufgenommen wird.

8. Verfahren nach einem der vorhergehenden Ansprüche, wobei das Verfahren bei jeder Gelegenheit durchgeführt wird, wenn der Positionssensor erfasst, dass sich das Ventilelement (20) während eines vorgegebenen Zeitraums im Stillstand befindet.

9. Verfahren nach einem der vorhergehenden Ansprüche, wobei das Verfahren zur Überwachung des Betriebs einer Ventilanordnung (1) in einem Motor verwendet wird.

10. Steuereinheit (50) zum Überwachen des Betriebs einer Ventilanordnung (1), wobei die Ventilanordnung (1) umfasst:
ein Ventilelement (20), das zwischen einem Geöffnet-Anschlag und einem Geschlossen-Anschlag beweglich ist, wobei eine Position des Ventilelements (20) zwischen dem Geöffnet-Anschlag und dem Geschlossen-Anschlag das Ausmaß bestimmt, in dem das Ventil geöffnet ist;
einen Gleichstrommotor (30) zum Bewegen des Ventilelements als Reaktion auf ein elektrisches Signal; und einen Positionssensor (40) zum Erfassen einer Ist-Position des Ventilelements (20);
wobei die Steuereinheit (50) umfasst:
eine Steuereinheit für elektrische Signale, die eingerichtet ist, um Daten entsprechend einer Soll-Position des Ventilelements (20) zu empfangen und ein elektrisches Signal zur Eingabe in den Gleichstrommotor (30) zu liefern, um eine Bewegung des Ventilelements (10) von der Ist-Position des Ventilelements (10) in die Soll-Position des Ventilelements (10) zu bewirken;
einen Positionsdatenempfangsabschnitt, der eingerichtet ist, um Positionsdaten des Ventilelements (10) vom Positionssensor (40) zu empfangen und festzustellen, dass sich das Ventilelement (10) im Stillstand befindet;
eine Vergleichseinheit für elektrische Signale, die eingerichtet ist, um das von der elektrischen Steuereinheit für elektrische Signale ausgegebene elektrische Signal mit einem elektrischen Referenzsignal zu vergleichen, um einen Fehler zu erkennen; und
einen Indikator, der eingerichtet ist, um anzuzeigen, ob das von der Steuereinheit für elektrische Signale ausgegebene elektrische Signal über oder unter dem elektrischen Referenzsignal liegt.

11. Steuereinheit (50) nach Anspruch 10, wobei:
der Positionsdatenempfangsabschnitt eingerichtet ist, um unter Verwendung des Positionssensors zu ermitteln, wann sich das bewegliche Ventilelement (10) entweder im vollständig geöffneten Zustand im Stillstand befindet, wobei das Ventilelement (10) in Richtung des Geöffnet-Anschlags vorgespannt ist, oder sich im vollständig geschlossenen Zustand im Stillstand befindet, wobei das Ventilelement (10) in Richtung des Geschlossen-Anschlags vorgespannt ist;
die Steuereinheit für elektrische Signale eingerichtet ist, um ein elektrisches Signal an den Gleichstrommotor (30) anzulegen, sodass das Ventilelement (10) zum Anschlag hin vorgespannt wird;
die Vergleichseinheit für elektrische Signale eingerichtet ist, um das von der Steuereinheit für elektrische Signale ausgegebene elektrische Signal mit einem elektrischen Referenzsignal zu vergleichen; und
der Indikator eingerichtet ist, um einen ersten Fehlertyp auszugeben, der einem Fehler der Steuereinheit entspricht, wenn das Signal, das von der Steuereinheit für elektrische Signale ausgegeben wird, unterhalb des elektrischen Referenzsignals liegt.

12. Steuereinheit (50) nach Anspruch 10, wobei:
der Positionsdatenempfangsabschnitt eingerichtet ist, um zu ermitteln, wann sich das bewegliche Ventilelement (10) in einer Position zwischen dem vollständig geöffneten Zustand und dem vollständig geschlossenen Zustand, jedoch nicht in diesen Zuständen, im Stillstand befindet;
die Steuereinheit für elektrische Signale eingerichtet ist, um ein elektrisches Signal an den Gleichstrommotor (30) anzulegen, während sich das Ventilelement (10) im Stillstand befindet und bleibt;
die Vergleichseinheit für elektrische Signale eingerichtet ist, um das von der Steuereinheit für elektrische Signale ausgegebene elektrische Signal mit einem elektrischen Referenzsignal zu vergleichen; und
der Indikator eingerichtet ist, um einen ersten Fehlertyp entsprechend einem elektrischen Fehler auszugeben, wenn das Signal, das von der Steuereinheit für elektrische Signale ausgegeben wird, unterhalb des elektrischen Referenzsignals liegt, und um einen zweiten Fehlertyp entsprechend einem mechanischen Fehler am Ventilelement (10) auszugeben, wenn das Signal, das von der Steuereinheit für elektrische Signal ausgegeben wird, oberhalb des elektrischen Referenzsignals liegt.

13. Steuereinheit (50) nach einem der Ansprüche 10 bis 12, wobei das von der Steuereinheit ausgegebene elektrische Signal ein Stromfluss ist und das elektrische Referenzsignal ein Referenzstrom ist.

14. Motorsteuermodul, umfassend die Steuereinheit nach einem der Ansprüche 10 bis 13.

15. Motor, aufweisend eine Ventilanordnung (1), umfassend:
ein Ventilelement (10), das zwischen einem Geöffnet-Anschlag und einem Geschlossen-Anschlag beweglich ist, wobei eine Position des Ventilelements zwischen dem Geöffnet-Anschlag und dem Geschlossen-Anschlag das Ausmaß bestimmt, in dem das Ventil geöffnet ist;
einen Gleichstrommotor (30) zum Bewegen des Ventilelements (10) als Reaktion auf ein elektrisches Signal; und
einen Positionssensor (40) zum Erfassen einer Ist-Position des Ventilelements (10); und eine in einem der Ansprüche 10 bis 13 definierte Steuereinheit (50).

## Revendications

1. Procédé de surveillance de fonctionnement d'un ensemble soupape (1), l'ensemble soupape (1) comprenant :
un élément de soupape (20) mobile entre un arrêt ouvert et un arrêt fermé dans lequel une position de l'élément de soupape (20) entre l'arrêt ouvert et l'arrêt fermé établit l'étendue d'ouverture de la soupape ;
un moteur à courant continu (30) pour déplacer l'élément de soupape en réponse à un signal électrique ;
un capteur de position (40) pour détecter une position réelle de l'élément de soupape (20) ; et un contrôleur (50) configuré pour recevoir des données correspondant à une position souhaitée de l'élément de soupape (20) et pour fournir un signal électrique calculé au moteur à courant continu (30) afin d'effectuer un mouvement de l'élément de soupape (20) de la position réelle de l'élément de soupape (20) à la position souhaitée de l'élément de soupape (20) ;
le procédé **caractérisé en ce qu'**il comprend les étapes consistant à :
mesurer le signal électrique délivré en sortie par le contrôleur pour l'introduire au moteur à courant continu (30) lorsque l'élément de soupape (20) est stationnaire ;
comparer le signal électrique mesuré délivré en sortie par le contrôleur (50) à un signal électrique de référence afin d'identifier une anomalie.

2. Procédé selon la revendication 1 comprenant en outre l'utilisation du capteur de position (40) pour détecter que l'élément de soupape mobile (20) est stationnaire.

3. Procédé selon la revendication 2, comprenant en outre :
la détection que l'élément de soupape mobile (20) est stationnaire soit dans l'état complètement ouvert, dans lequel l'élément de soupape (20) est sollicité en direction de l'arrêt ouvert, soit dans l'état complètement fermé, dans lequel l'élément de soupape (20) est sollicité en direction de l'arrêt fermé, en utilisant le capteur de position (40) ;
l'application d'un signal électrique délivré en sortie par le contrôleur au moteur à courant continu (30) de telle sorte que l'élément de soupape (20) est sollicité en direction de l'arrêt associé à sa position ;
la comparaison du signal électrique délivré en sortie par le contrôleur (50) au signal électrique de référence ;
dans lequel un signal électrique délivré en sortie par le contrôleur (50) étant inférieur au signal électrique de référence indique un premier type d'erreur correspondant à une erreur de contrôleur.

4. Procédé selon la revendication 2, comprenant en outre :
l'utilisation du capteur de position (40) pour détecter que l'élément de soupape (20) est stationnaire à une position entre, mais sans inclure, l'état complètement ouvert et l'état complètement fermé ;
l'application d'un signal électrique délivré en sortie par le contrôleur (50) au moteur à courant continu (30) ; la comparaison du signal électrique délivré en sortie par le contrôleur (50) au signal électrique de référence ;
dans lequel un signal électrique délivré en sortie par le contrôleur (50) étant inférieur au signal électrique de référence indique un premier type d'erreur correspondant à une erreur de contrôleur, et un signal électrique délivré en sortie par le contrôleur étant supérieur au signal électrique de référence indique un deuxième type d'erreur correspondant à une anomalie mécanique avec la soupape ou l'élément de soupape (20).

5. Procédé selon une quelconque revendication précédente dans lequel le signal électrique délivré en sortie par le contrôleur (50) est un passage de courant et le signal électrique de référence est un courant de référence.

6. Procédé selon la revendication 5 dans lequel le courant de référence est un courant seuil.

7. Procédé selon la revendication 6 dans lequel le courant seuil est 5 % d'un courant efficace maximal pouvant être reçu par le moteur à courant continu (30) en utilisation normale.

8. Procédé selon une quelconque revendication précédente dans lequel le procédé est effectué à chaque occasion lorsque l'élément de soupape (20) est détecté par le capteur de position comme étant stationnaire pendant une période prédéfinie.

9. Procédé selon une quelconque revendication précédente dans lequel le procédé est utilisé pour surveiller le fonctionnement d'un ensemble soupape (1) dans un moteur.

10. Contrôleur (50) pour surveiller le fonctionnement d'un ensemble soupape (1), l'ensemble soupape (1) comprenant :
un élément de soupape (20) mobile entre un arrêt ouvert et un arrêt fermé dans lequel une position de l'élément de soupape (20) entre l'arrêt ouvert et l'arrêt fermé établit l'étendue d'ouverture de la soupape ;
un moteur à courant continu (30) pour déplacer l'élément de soupape en réponse à un signal électrique ; et un capteur de position (40) pour détecter une position réelle de l'élément de soupape (20) ;
le contrôleur (50) comprenant :
un contrôleur de signal électrique configuré pour recevoir des données correspondant à une position souhaitée de l'élément de soupape (20) et pour fournir un signal électrique pour introduction au moteur à courant continu (30) afin d'effectuer un mouvement de l'élément de soupape (10) de la position réelle de l'élément de soupape (10) à la position souhaitée de l'élément de soupape (10) ;
une partie de réception de données de position configurée pour recevoir des données de position de l'élément de soupape (10) depuis le capteur de position (40) et déterminer que l'élément de soupape (10) est stationnaire ;
un comparateur de signal électrique configuré pour comparer le signal électrique délivré en sortie par le contrôleur de signal électrique à un signal électrique de référence afin d'identifier une anomalie ; et
un indicateur configuré pour indiquer si le signal électrique délivré en sortie par le contrôleur de signal électrique est supérieur ou inférieur au signal électrique de référence.

11. Contrôleur (50) selon la revendication 10 dans lequel :
la partie de réception de données de position est configurée pour déterminer lorsque l'élément de soupape mobile (10) est stationnaire soit dans l'état complètement ouvert, dans lequel l'élément de soupape (10) est sollicité en direction de l'arrêt ouvert, soit dans l'état complètement fermé, dans lequel l'élément de soupape (10) est sollicité en direction de l'arrêt fermé, en utilisant le capteur de position ;
le contrôleur de signal électrique est configuré pour appliquer un signal électrique au moteur à courant continu (30) de telle sorte que l'élément de soupape (10) est sollicité en direction de l'arrêt ;
le comparateur de signal électrique est configuré pour comparer le signal électrique délivré en sortie par le contrôleur de signal électrique à un signal électrique de référence ; et
l'indicateur est configuré pour délivrer en sortie un premier type d'erreur correspondant à une erreur de contrôleur si le signal de sortie du contrôleur de signal électrique est inférieur au signal électrique de référence.

12. Contrôleur (50) selon la revendication 10 dans lequel :
la partie de réception de données de position est configurée pour déterminer lorsque l'élément de soupape mobile (10) est stationnaire à une position entre, mais sans inclure, l'état complètement ouvert et l'état complètement fermé ;
le contrôleur de signal électrique est configuré pour appliquer un signal électrique au moteur à courant continu (30) alors que l'élément de soupape (10) est et reste stationnaire ;
le comparateur de signal électrique est configuré pour comparer le signal électrique délivré en sortie par le contrôleur de signal électrique à un signal électrique de référence ; et
l'indicateur est configuré pour délivrer en sortie un premier type d'erreur correspondant à une erreur électrique si le signal de sortie du contrôleur de signal électrique est inférieur au signal électrique de référence et pour délivrer en sortie un deuxième type d'erreur correspondant à une anomalie mécanique avec l'élément de soupape (10) si le signal de sortie du contrôleur de signal électrique est supérieur au signal électrique de référence.

13. Contrôleur (50) selon l'une quelconque des revendications 10 à 12 dans lequel le signal électrique délivré en sortie par le contrôleur est un passage de courant et le signal électrique de référence est un courant de référence.

14. Module de commande de moteur comprenant le contrôleur selon l'une quelconque des revendications 10 à 13.

15. Moteur ayant un ensemble soupape (1) comprenant :
un élément de soupape (10) mobile entre un arrêt ouvert et un arrêt fermé dans lequel une position de l'élément de soupape entre l'arrêt ouvert et l'arrêt fermé établit l'étendue d'ouverture de la soupape ;
un moteur à courant continu (30) pour déplacer l'élément de soupape (10) en réponse à un signal électrique ; et
un capteur de position (40) pour détecter une position réelle de l'élément de soupape (10) ; et un contrôleur (50) tel que défini dans l'une quelconque des revendications 10 à 13.
